(19) Europäisches Patentamt
European Patent Office
Office européen des brevets

(11) **EP 4 752 789 A1**

(12) **EUROPEAN PATENT APPLICATION**
published in accordance with Art. 153(4) EPC

(43) Date of publication:
**03.06.2026 Bulletin 2026/23**

(21) Application number: **23950072.1**

(22) Date of filing: **29.08.2023**

(51) International Patent Classification (IPC):
**G06N 3/08** *(2023.01)*    **G06N 3/04** *(2023.01)*

(52) Cooperative Patent Classification (CPC):
**G06N 3/04; G06N 3/08**

(86) International application number:
**PCT/CN2023/115476**

(87) International publication number:
**WO 2025/043478 (06.03.2025 Gazette 2025/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **HUAWEI TECHNOLOGIES CO., LTD.**
**Shenzhen 518129 (CN)**

(72) Inventors:
• **ZHANG, Gongzheng**
  **Shenzhen, Guangdong 518129 (CN)**
• **XU, Chen**
  **Shenzhen, Guangdong 518129 (CN)**
• **WANG, Jian**
  **Shenzhen, Guangdong 518129 (CN)**
• **LI, Rong**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **NEURAL NETWORK MODEL TRAINING METHOD AND COMMUNICATION APPARATUS**

(57) This application provides a neural network model training method and a communication apparatus. The method includes: A transmit-end device performs, by using a first neural network model, forward inference on training data included in a first training process, to obtain a first forward inference result; and sends the first forward inference result to a receive-end device. Further, the transmit-end device receives a first feedback result for the first forward inference result from the receive-end device, and obtains a first intermediate result generated when forward inference is performed on training data included in the first training process. The transmit-end device calculates a gradient of the first training process based on the first feedback result, the first forward inference result, and the first intermediate result. Further, the transmit-end device updates a first model parameter to a second model parameter based on the gradient corresponding to the first training process. The neural network model training method facilitates optimization of performance of a wireless communication system to which the neural network model is applied.

FIG. 5

EP 4 752 789 A1

**Description**

**TECHNICAL FIELD**

This application relates to the field of communication technologies, and in particular, to a neural network model training method and a communication apparatus.

**BACKGROUND**

Combining a wireless communication system with a neural network is training a neural network model in the wireless communication system through data-driven training. This helps improve performance of the wireless communication system. The neural network model may be applied to each device (including a receive-end device, a transmit-end device, or the like) in the wireless communication system. For example, the neural network model is applied to a channel decoding module in the receive-end device, and data-driven training is performed to help improve channel decoding performance of the receive-end device.

The neural network model usually applied to the wireless communication system is deployed on a device in the wireless communication system after training of the neural network model is completed in a training system. Adaptation between a neural network model obtained by using this training method and a communication environment (or understood as a communication channel in the communication environment) is low, which affects performance of the wireless communication system to which the neural network model is applied. How to improve adaptation between a neural network model and a communication channel is an urgent problem to be resolved.

**SUMMARY**

This application provides a neural network model training method and a communication apparatus. For a neural network model deployed on a device, a training manner in which the neural network model is updated based on training data of a communication network helps improve adaptation between the neural network model and a communication channel, thereby facilitating optimization of performance of a wireless communication system to which the neural network model is applied.

According to a first aspect, this application provides a neural network model training method. The method is applied to a transmit-end device or a module (for example, a chip or a chip system) in a transmit-end device. For example, the method is applied to the transmit-end device. The method includes: The transmit-end device sends a first forward inference result to a receive-end device, where the first forward inference result is obtained by performing, by a first neural network model based on a first model parameter, forward inference on training data included in a first training process, the first training process is any one of at least one training process corresponding to the first neural network model, and the first neural network model is a model deployed on the transmit-end device. The transmit-end device receives a first feedback result for the first forward inference result from the receive-end device. The transmit-end device obtains a first intermediate result, where the first intermediate result is generated when forward inference is performed on training data included in the first training process. The transmit-end device calculates a gradient of the first training process based on the first feedback result, the first forward inference result, and the first intermediate result. Further, the transmit-end device updates the first model parameter to a second model parameter based on the gradient corresponding to the first training process.

Based on the method described in the first aspect, after the first neural network model is deployed on the transmit-end device, the transmit-end device and the receive-end device exchange information by using a communication system (or understood as a real channel in an actual communication environment). In other words, after performing forward inference on the training data by using the first neural network model, the transmit-end device sends the forward inference result to the receive-end device over a channel of an actual communication network. When the receive-end device receives the forward inference result over the channel, the forward inference result is affected by a transmission environment of the channel (that is, may be understood as carrying information about a real channel). Therefore, a feedback result obtained based on this forward inference result may also be understood as carrying the information about the real channel. Subsequently, the transmit-end device receives the feedback result, and updates, based on the feedback result, the model parameter of the first neural network model deployed on the transmit-end device, which helps improve adaptation between the neural network model and an actual communication scenario, thereby facilitating optimization of performance of a wireless communication system to which the neural network model is applied.

In a possible implementation, the transmit-end device obtains the first intermediate result from parameter cache space corresponding to the first training process. By implementing this possible implementation, the transmit-end device directly obtains the first intermediate result from the parameter cache space, which helps save compute resources of the transmit-end device.

In a possible implementation, after the transmit-end device calculates the gradient of the first training process based on the first feedback result, the first forward inference result, and the first intermediate result, the transmit-end device clears the first intermediate result from the parameter cache space corresponding to the first training process. By implementing this possible implementation, after using the first intermediate result, the transmit-end device clears the first intermediate result from the parameter cache space, which helps save cache resources of the transmit-end device.

In a possible implementation, the transmit-end device may perform forward inference again based on the training data included in the first training process, to obtain the first intermediate result.

In a possible implementation, the first training process includes at least one subprocess. Each subprocess includes at least one piece of training data. The first forward inference result includes a forward inference result of each piece of training data in the training data included in the first training process. The first intermediate result includes an intermediate result corresponding to the forward inference result of each piece of training data. The first feedback result includes a feedback result corresponding to the forward inference result of each piece of training data. The forward inference result of each piece of training data is obtained based on the first model parameter.

In a possible implementation, at least one of the following is determined based on at least one of a capability of the transmit-end device, a capability of the receive-end device, and/or a channel condition: a quantity of the training data included in the first training process; a quantity of subprocesses included in the first training process; or a quantity of training data included in the subprocess. By implementing the possible implementation, this helps improve adaptation between a training process of a neural network model and a communication device, which helps improve training effect.

In a possible implementation, the transmit-end device updates the first model parameter to a third model parameter based on a gradient corresponding to a second training process. The second training process is any one of the at least one training process except the first training process. The gradient of the second training process is obtained by performing backward gradient calculation based on a second feedback result, a second forward inference result, and a second intermediate result. The second forward inference result is obtained by performing, based on the first model parameter, forward inference on training data included in the second training process. The second intermediate result is generated when forward inference is performed on the training data included in the first training process. The second feedback result is a feedback result for the second forward inference result. Further, the transmit-end device updates a model parameter of the first neural network model to a fourth model parameter based on the second model parameter and the third model parameter. In this possible implementation, the transmit-end device may update the model parameter of the first neural network model in parallel by using a plurality of training processes, and finally update the model parameter of the first neural network model based on model parameters obtained through the plurality of training processes. This helps improve a training speed of the first neural network model.

In a possible implementation, a quantity of training processes in the at least one training process corresponding to the first neural network model is determined based on at least one of the capability of the transmit-end device, the capability of the receive-end device, and/or the channel condition.

In a possible implementation, the capability of the transmit-end device includes one or more of a calculation speed of the transmit-end device, a size of cache space of the transmit-end device, and a forward inference time and/or a backward gradient calculation time of the transmit-end device for a reference model. The capability of the receive-end device includes one or more of a calculation speed of the receive-end device, a size of cache space of the receive-end device, and a forward inference time and/or a backward gradient calculation time of the receive-end device for a reference model. The channel condition includes one or more of a radio resource, channel quality, a communication rate, and/or a communication delay for communication between the transmit-end device and the receive-end device.

In a possible implementation, the transmit-end device receives capability information from the receive-end device, where the capability information indicates the capability of the receive-end device.

In a possible implementation, different training processes of the first neural network model correspond to different parameter cache space. By implementing this possible implementation, the training processes may be distinguished by using the parameter cache space, which helps improve efficiency of obtaining an intermediate result of each training process by the transmit-end device.

In a possible implementation, different subprocesses in the first training process correspond to different parameter cache space. By implementing this possible implementation, the subprocesses may be distinguished by using the parameter cache space, which helps improve efficiency of obtaining an intermediate result of each subprocess by the transmit-end device.

According to a second aspect, this application provides a neural network model training method. The method is applied to a receive-end device or a module (for example, a chip or a chip system) in a receive-end device. For example, the method is applied to the receive-end device. The method includes: The receive-end device receives a first forward inference result from a transmit-end device, where the first forward inference result is obtained by performing, by a first neural network model based on a first model parameter, forward inference on training data included in a first training process, the first training process is any one of at least one training process corresponding to the first neural network model, and the first neural network model is a model deployed on the transmit-end device. The receive-end device sends the first feedback result to the transmit-end device based on the first forward inference result.

Based on the method described in the second aspect, after the first neural network model is deployed on the transmit-end device, the receive-end device receives the forward inference result over a channel of a communication system. It may be understood that the forward inference result is affected by a transmission environment of the channel (that is, carries information about a real channel). Therefore, the feedback result obtained based on this forward inference result may also be understood as carrying the information about the real channel. In this case, the receive-end device sends the feedback result to the transmit-end device, which helps improve adaptation between the feedback result and an actual communication scenario, thereby facilitating optimization of performance of a wireless communication system to which the first neural network model is applied. For beneficial effects of the other implementations described in the second aspect, refer to the beneficial effects of the implementations described in the first aspect. Details are not described below again.

In a possible implementation, the first training process includes at least one subprocess. Each subprocess includes at least one piece of training data. The first forward inference result includes a forward inference result of each piece of training data in the training data included in the first training process. The first intermediate result includes an intermediate result corresponding to the forward inference result of each piece of training data. The first feedback result includes a feedback result corresponding to the forward inference result of each piece of training data. The forward inference result of each piece of training data is obtained based on the first model parameter.

In a possible implementation, at least one of the following is determined based on at least one of a capability of the transmit-end device, a capability of the receive-end device, and/or a channel condition: a quantity of the training data included in the first training process; a quantity of subprocesses included in the first training process; or a quantity of training data included in the subprocess.

In a possible implementation, the receive-end device receives a second forward inference result from the transmit-end device, where the second forward inference result is obtained by performing, based on the first model parameter, forward inference on training data included in a second training process, and the second training process is any one of the at least one training process except the first training process. The receive-end device performs backward gradient calculation based on the second forward inference result, to obtain a second feedback result; and sends the second feedback result to the transmit-end device, where the second feedback result is used together with the first feedback result to update a model parameter of the first neural network model.

In a possible implementation, a quantity of training processes in the at least one training process corresponding to the first neural network model is determined based on at least one of the capability of the transmit-end device, the capability of the receive-end device, and/or the channel condition.

In a possible implementation, the capability of the transmit-end device includes one or more of a calculation speed of the transmit-end device, a size of cache space of the transmit-end device, and a forward inference time and/or a backward gradient calculation time of the transmit-end device for a reference model. The capability of the receive-end device includes one or more of a calculation speed of the receive-end device, a size of cache space of the receive-end device, and a forward inference time and/or a backward gradient calculation time of the receive-end device for a reference model. The channel condition includes one or more of a radio resource, channel quality, a communication rate, and/or a communication delay for communication between the transmit-end device and the receive-end device.

In a possible implementation, a second neural network model is deployed on the receive-end device. The receive-end device updates a fifth model parameter of the second neural network model to a sixth model parameter based on the first forward inference result; updates the fifth model parameter of the second neural network model to a seventh model parameter based on the second forward inference result; and further obtains an eighth model parameter based on the sixth model parameter and the seventh model parameter. In this possible implementation, the receive-end device may update a model parameter of the second neural network model in parallel based on forward inference results of a plurality of training processes, and finally update the model parameter of the second neural network model based on model parameters obtained through the plurality of training processes. This helps improve a training speed of the second neural network model.

In a possible implementation, a second neural network model is deployed on the receive-end device, and the receive-end device updates a fifth model parameter of the second neural network model to a sixth model parameter based on the first forward inference result.

According to a third aspect, this application provides a communication apparatus. The communication apparatus may be a transmit-end device, or may be an apparatus in a transmit-end device, or may be an apparatus that can be used together with a transmit-end device. The communication apparatus may alternatively be a chip system. The communication apparatus may perform the method according to the first aspect. A function of the communication apparatus may be implemented by hardware, or may be implemented by hardware executing corresponding software. The hardware or the software includes one or more units or modules corresponding to the foregoing function. The unit or module may be software and/or hardware. For an operation performed by the communication apparatus and beneficial effects, refer to the method and the beneficial effects in the first aspect.

According to a fourth aspect, this application provides a communication apparatus. The communication apparatus may be a receive-end device, or may be an apparatus in a receive-end device, or may be an apparatus that can be used together with a receive-end device. The communication apparatus may alternatively be a chip system. The communication apparatus may perform the method according to the second aspect. A function of the communication apparatus may be implemented by hardware, or may be implemented by hardware executing corresponding software. The hardware or the software includes one or more units or modules corresponding to the foregoing function. The unit or module may be software and/or hardware. For an operation performed by the communication apparatus and beneficial effects, refer to the method and the beneficial effects in the second aspect.

According to a fifth aspect, this application provides a communication apparatus. The communication apparatus includes a processor and an interface circuit. The interface circuit is configured to: receive a signal from a communication apparatus other than the communication apparatus and transmit the signal to the processor; or send a signal from the processor to a communication apparatus other than the communication apparatus. The processor is configured to implement the method according to the first aspect by using a logic circuit or by executing code instructions, or the processor is configured to implement the method according to the second aspect by using a logic circuit or by executing code instructions.

According to a sixth aspect, this application provides a computer-readable storage medium. The storage medium stores a computer program or instructions. When the computer program or the instructions are executed by a communication apparatus, the method according to the first aspect or the method according to the second aspect is implemented.

According to a seventh aspect, this application provides a computer program product including instructions. When a communication apparatus reads and executes the instructions, the communication apparatus is enabled to perform the method according to the first aspect, or the communication apparatus is enabled to perform the method according to the second aspect.

According to an eighth aspect, this application provides a communication system, including a communication apparatus configured to perform the method according to the first aspect and a communication apparatus configured to perform the method according to the second aspect.

## BRIEF DESCRIPTION OF DRAWINGS

FIG. 1a is a diagram of an architecture of a communication system according to an embodiment of this application;
FIG. 1b is another diagram of a wireless communication system to which an embodiment of this application is applied;
FIG. 2 is a diagram of a wireless communication system based on a neural network transmitter and a neural network receiver according to an embodiment of this application;
FIG. 3 is a diagram of different modules in several neural network model-optimized transceivers according to an embodiment of this application;
FIG. 4 is a diagram of a training procedure of an intelligent air interface according to an embodiment of this application;
FIG. 5 is a schematic flowchart of a neural network model training method according to an embodiment of this application;
FIG. 6 is another schematic flowchart of a neural network model training method according to an embodiment of this application;
FIG. 7 is still another schematic flowchart of a neural network model training method according to an embodiment of this application;
FIG. 8 is a diagram of a structure of a communication apparatus according to an embodiment of this application; and
FIG. 9 is another diagram of a structure of a communication apparatus according to an embodiment of this application.

## DESCRIPTION OF EMBODIMENTS

To make the objectives, technical solutions, and advantages of this application clearer, the following further describes this application in detail with reference to the accompanying drawings.

The terms "first", "second", and the like in this specification, claims, and accompanying drawings of this application are used to distinguish between different objects, but are not used to describe a specific order. In addition, the terms "including" and "having" and any other variants thereof are intended to cover a non-exclusive inclusion. For example, a process, a method, a system, a product, or a device that includes a series of operations or units is not limited to the listed operations or units, but optionally further includes an unlisted operation or unit, or optionally further includes another inherent operation or unit of the process, the method, the product, or the device.

"Embodiments" mentioned herein mean that specific features, structures, or characteristics described in combination with embodiments may be included in at least one embodiment of this application. The phrase shown in various locations in this specification may not necessarily refer to a same embodiment, and is not an independent or optional embodiment exclusive from another embodiment. It is explicitly and implicitly understood by a person skilled in the art that embodiments described in the specification may be combined with another embodiment.

For ease of specific understanding of embodiments of this application, the following first describes a system architecture in embodiments of this application.

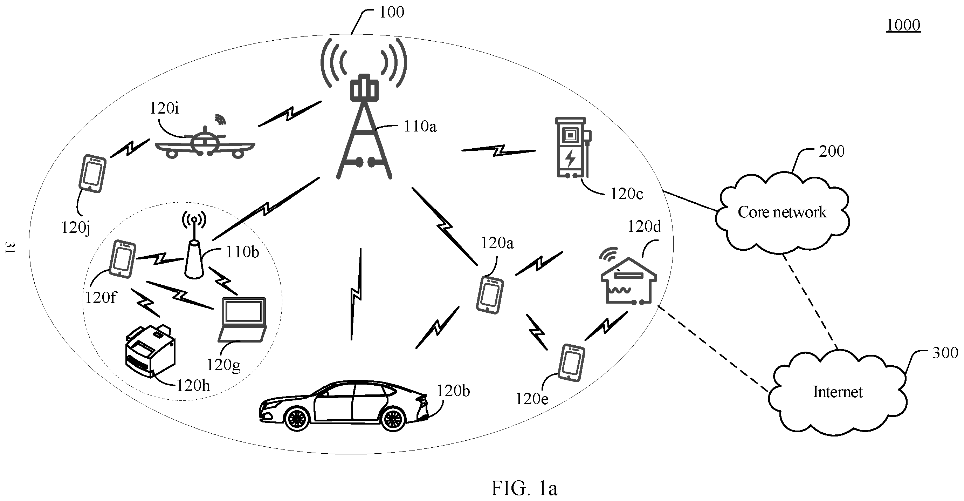

FIG. 1a is a diagram of an architecture of a communication system 1000 to which an embodiment of this application is applied. As shown in FIG. 1a, the communication system includes a radio access network (radio access network, RAN) 100 and a core network 200. Optionally, the communication system 1000 may further include an internet 300. The RAN 100 may include at least one RAN node (for example, 110a and 110b in FIG. 1a, which are collectively referred to as 110), and may further include at least one terminal (for example, 120a to 120j in FIG. 1a, which are collectively referred to as 120). The RAN 100 may also include another RAN node, for example, a wireless relay device and/or a wireless backhaul device (not shown in FIG. 1a). The terminal 120 is connected to the RAN node 110 in a wireless manner, and the RAN node 110 is connected to the core network 200 in a wireless or wired manner. A core network device in the core network 200 and the RAN node 110 in the RAN 100 may be different independent physical devices, or may be a same physical device that integrates a logical function of the core network device and a logical function of the RAN node. Terminals may be connected to each other in a wired or wireless manner and RAN nodes may be connected to each other in a wired or wireless manner.

The RAN 100 may be an evolved universal terrestrial radio access (evolved universal terrestrial radio access, E-UTRA) system, a new radio (new radio, NR) system, or a future radio access system defined in the 3rd generation partnership project (3rd generation partnership project, 3GPP). The RAN 100 may further include the foregoing two or more different radio access systems. The RAN 100 may also be an open RAN (open RAN, O-RAN).

The RAN node is also referred to as a radio access network device, a RAN entity, or an access node. The RAN node may also be referred to as a network device below, and is configured to help the terminal access a communication system in a wireless manner. In an application scenario, the RAN node may be a base station (base station), an evolved NodeB (evolved NodeB, eNodeB), a transmission reception point (transmission reception point, TRP), a next-generation NodeB (next generation NodeB, gNB) in a 5th generation (5th generation, 5G) mobile communication system, a next-generation NodeB in a 6th generation (6th generation, 6G) mobile communication system, or a base station in a future mobile communication system. The RAN node may be a macro base station (for example, 110a in FIG. 1a), may be a micro base station or an indoor base station (for example, 110b in FIG. 1a), or may be a relay node or a donor node.

In another application scenario, a plurality of RAN nodes may cooperate to help a terminal implement radio access, and different RAN nodes separately implement some functions of a base station. For example, the RAN node may be a central unit (central unit, CU), a distributed unit (distributed unit, DU), or a radio unit (radio unit, RU). The CU herein completes functions of a radio resource control protocol layer and a packet data convergence protocol (packet data convergence protocol, PDCP) layer of the base station, and may further complete functions of a service data adaptation protocol (service data adaptation protocol, SDAP) layer. The DU completes functions of a radio link control layer and a medium access control (medium access control, MAC) layer of the base station, and may further complete a part or all functions of a physical layer. For specific descriptions of the foregoing protocol layers, refer to related technical specifications in 3GPP. The RU may be configured to receive and send radio frequency signals. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be classified into two types of RAN nodes at a CU-control plane and a CU-user plane.

The RAN node may support one or more types of fronthaul interfaces, and different fronthaul interfaces correspond to DUs and RUs with different functions. If a fronthaul interface between the DU and the RU is a common public radio interface (common public radio interface, CPRI), the DU is configured to implement one or more baseband functions, and the RU is configured to implement one or more radio frequency functions. If a fronthaul interface between the DU and the RU is an enhanced common public radio interface (enhanced common public radio interface, eCPRI), compared with the implementation of the CPRI, some downlink baseband functions and/or uplink baseband functions are moved from the DU to the RU for implementation. Different manners of splitting the DU and the RU correspond to different categories (category, Cat) of eCPRIs, for example, eCPRI Cat A, B, C, D, E, and F.

The eCPRI Cat A is used as an example. For downlink transmission, splitting is performed at layer mapping. The DU is configured to implement the layer mapping and one or more functions before the layer mapping (to be specific, one or more of encoding, rate matching, scrambling, modulation, and the layer mapping), and other functions (for example, one or more of RE mapping, digital beamforming (beamforming, BF), or inverse fast Fourier transform (inverse fast Fourier transform, IFFT)/cyclic prefix (cyclic prefix, CP) addition) after the layer mapping are moved to the RU for implementation. For uplink transmission, splitting is performed at RE demapping. The DU is configured to implement the demapping and one or more functions before the demapping (to be specific, one or more of the following functions: decoding, de-rate matching, descrambling, demodulation, inverse discrete Fourier transform (inverse discrete Fourier transform, IDFT), channel equalization, and the RE demapping), and other functions (for example, one or more of digital BF or fast Fourier transform (FFT)/CP removal) after the demapping are moved to the RU for implementation. It can be understood that, for function descriptions of DUs and RUs corresponding to various categories of eCPRIs, reference may be made to the eCPRI protocol. Details are not described herein.

In a possible design, a processing unit for implementing a baseband function in the BBU is referred to as a baseband high (baseband high, BBH) unit, and a processing unit for implementing a baseband function in the RRU/AAU/RRH is referred to as a baseband low (baseband low, BBL) unit.

In different systems, the RAN node may have different names. For example, in an O-RAN system, a CU may be referred to as an open CU (open CU, O-CU), a DU may be referred to as an open DU (open DU, O-DU), and an RU may be referred to as an open RU (open RU, O-RU). The RAN node in embodiments of this application may be implemented by using a software module, a hardware module, or a combination of a software module and a hardware module. For example, the RAN node may be a server loaded with a corresponding software module. A specific technology and a specific device form that are used by the RAN node are not limited in embodiments of this application. For ease of description, the following is described by using an example in which the base station is used as a RAN node.

The terminal is a device having wireless transmission and reception functions, and may send a signal to the base station or receive a signal from the base station. The terminal may also be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle to everything, V2X) communication, machine-type communication (machine-type communication, MTC), internet of things (internet of things, IOT), virtual reality, augmented reality, industrial control, autonomous driving, telemedicine, a smart grid, smart furniture, a smart office, smart wearable, smart transportation, and a smart city. The terminal may be a mobile phone, a tablet computer, a computer with wireless transmission and reception functions, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or movable. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1a may be configured as a mobile base station, and for a terminal 120j accessing the radio access network 100 through 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, 110a and 110b in FIG. 1a each may be referred to as a communication apparatus having a base station function, and 120a to 120j in FIG. 1a each may be referred to as a communication apparatus having a terminal function.

Communication between the base station and the terminal, between base stations, and between terminals may be performed by using a licensed spectrum, or may be performed by using an unlicensed spectrum, or may be performed by using both a licensed spectrum and an unlicensed spectrum. Communication may be performed by using a spectrum below 6 gigahertz (gigahertz, GHz), or may be performed by using a spectrum above 6 GHz, or may be performed by using a spectrum below 6 GHz and a spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. The function of the terminal may alternatively be performed by a module (for example, a chip or a modem) in the terminal, or may be performed by an apparatus including the function of the terminal.

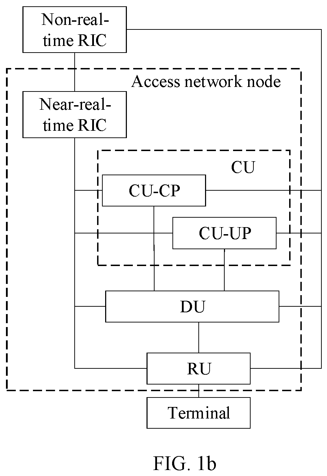

FIG. 1b is another diagram of a wireless communication system to which an embodiment of this application is applied.

As shown in FIG. 1b, the wireless communication system includes a RAN intelligent controller (RAN intelligent controller, RIC). For example, the RIC may be configured to implement AI-related functions. For example, the RIC includes a near-real-time RIC (near-real time RIC, near-RT RIC) and a non-real-time RIC (non-real time RIC, Non-RT RIC). The non-real-time RIC mainly processes non-real-time information, for example, latency-insensitive data. A latency of the data may be several seconds. The real-time RIC mainly processes near-real-time information, for example, latency-sensitive data. A latency of the data is tens of milliseconds.

The near-real-time RIC is used for model training and inference, for example, is configured to: train an AI model and perform inference by using the AI model. The near-real-time RIC may obtain network-side information and/or terminal-side information from a RAN node (for example, a CU, a CU-CP, a CU-UP, a DU, and/or an RU) and/or a terminal. The information may be used as training data or inference data. Optionally, the near-real-time RIC may deliver an inference result to the RAN node and/or the terminal. Optionally, the CU and the DU may exchange an inference result, and/or the DU and the RU may exchange an inference result. For example, the near-real-time RIC delivers an inference result to the DU, and the DU sends the inference result to the RU.

The non-real-time RIC is also used for model training and inference, for example, is configured to: train an AI model and perform inference by using the model. The non-real-time RIC may obtain network-side information and/or terminal-side information from the RAN node (for example, the CU, the CU-CP, the CU-UP, the DU, and/or the RU) and/or the terminal. The information may be used as training data or inference data, and an inference result may be delivered to the RAN node and/or the terminal. Optionally, the CU and the DU may exchange an inference result, and/or the DU and the RU may exchange an inference result. For example, the non-real-time RIC delivers an inference result to the DU, and the DU sends the inference result to the RU.

The near-real-time RIC and the non-real-time RIC each may alternatively be independently deployed as a network element. Optionally, the near-real-time RIC and the non-real-time RIC may alternatively serve as a part of another device. For example, the near-real-time RIC is deployed on the RAN node (for example, the CU or the DU), and the non-real-time RIC is deployed on an OAM, a cloud server, a core network device, or another network device.

In an actual application, the wireless communication system may include a plurality of network devices (also referred to as access network devices), and may also include a plurality of terminal devices. This is not limited. One network device may serve one or more terminal devices. One terminal device may also access one or more network devices. Quantities of terminal devices and network devices included in the wireless communication system are not limited in embodiments of this application.

For ease of understanding of embodiments of this application, the following describes embodiments of this application in several aspects.

(1) "Sending" and "receiving" in embodiments of this application represent signal transmission directions. For example, "sending information to XX" may be understood as that a destination end of the information is the XX, and may include direct sending through an air interface, or include indirect sending through an air interface by another unit or module. "Receiving information from YY" may be understood as that a source end of the information is YY, and may include direct receiving from YY through an air interface, or may include indirect receiving from YY through an air interface from another unit or module. "Sending" may alternatively be understood as "outputting" of a chip interface, and "receiving" may alternatively be understood as "inputting" of a chip interface.

In other words, sending and receiving may be performed between devices, for example, between a network device and a terminal device; or may be performed inside a device, for example, sending or receiving between components, modules, chips, software modules, or hardware modules inside the device through a bus, a cable, or an interface.

It may be understood that necessary processing, such as encoding and modulation, may be performed on the information between the source at which the information is sent and the destination, but the destination may understand valid information from the source. Similar descriptions in this application may be understood similarly. Details are not described again.

(2) In embodiments of this application, "indication" may include a direct indication and an indirect indication, or may include an explicit indication and an implicit indication. Information indicated by a piece of information (for example, the following indication information) is referred to as to-be-indicated information. In a specific implementation process, the to-be-indicated information may be indicated in a plurality of manners, for example, but not limited to, directly indicating the to-be-indicated information, for example, indicating the to-be-indicated information, an index of the to-be-indicated information, or the like. Alternatively, the to-be-indicated information may be indirectly indicated by indicating other information. There is an association relationship between the other information and the to-be-indicated information. Alternatively, only a part of the to-be-indicated information may be indicated, and the remaining part of the to-be-indicated information is known or pre-agreed on. For example, specific information may alternatively be indicated by using an arrangement sequence of pieces of information that are pre-agreed on (for example, predefined in a protocol), to reduce indication overheads to some extent. A specific indication manner is not limited in this application. It may be understood that, for a sender of the indication information, the indication information may indicate to-be-indicated information, and for a receiver of the indication information, the indication information may be for determining to-be-indicated information.

For ease of understanding related content of embodiments of this application, the following further explains and describes some terms in embodiments of this application. This part is merely for ease of understanding, and cannot be considered as a disclosure or a specific limitation on the technical solutions of this application.

1. Neural network

The neural network may include a neuron. The neuron may be an operation unit that uses $x_s$ as an input. An output of the operation unit may be shown in Formula (1):

$$h_{W,b}(x) = f\left(\sum_{s=1}^{n} W_s x_s + b\right) \qquad (1)$$

Herein, s=1, 2, ..., n; n is a natural number greater than 1; $W_s$ is a weight of $x_s$; b is a bias of the neuron; and f is an activation function (activation function) of the neuron, and is used to introduce a nonlinear feature into the neural network, to convert an input signal in the neuron into an output signal. The output signal of the activation function may be used as an input of a next convolutional layer. The activation function may be a sigmoid function. The neural network is a network formed by connecting many single neurons together. To be specific, an output of a neuron may be an input of another neuron. An input of each neuron may be connected to a local receptive field of a previous layer to extract a feature of the local receptive field. The local receptive field may be a region including several neurons.

It should be noted that the neural network model mentioned in this application may be one or more of a network model of a neural network, a network model of a deep neural network (deep neural network, DNN), a network model of a convolutional neural network (convolutional neural network, CNN), a network model of a recurrent neural network (recurrent neural network, RNN), or a network model of a generative adversarial network, or a variation (or a set) of a combination thereof. This is not specifically limited in this application.

2. Intelligent air interface technology

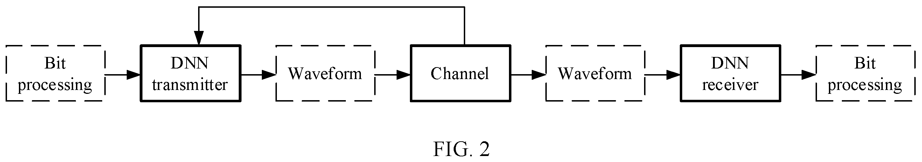

The intelligent air interface technology may be understood as a technology of applying a neural network model in a wireless communication system to optimize performance of the wireless communication system. FIG. 2 shows a wireless communication system based on a neural network transmitter and a neural network receiver (collectively referred to as a transceiver below) according to this application. In the system shown in FIG. 2, a transceiver to which a neural network model is applied may optimize signal sending and receiving performance through data-driven training.

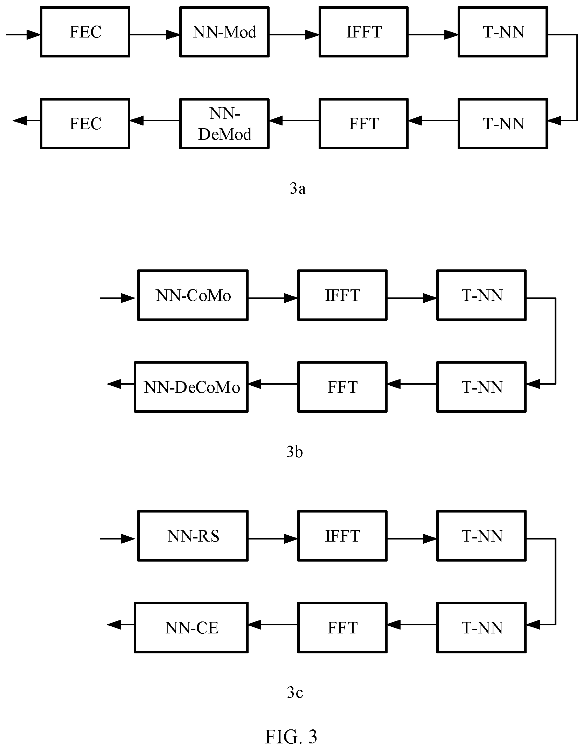

It may be understood that optimizing performance of the transceiver by applying the neural network model is optimizing, by using the neural network model, modules such as channel encoding, modulation, waveform, and pilot in the transceiver that are used for signal processing. For example, FIG. 3 is a diagram of different modules in several neural network model-optimized transceivers according to an embodiment of this application. 3a in FIG. 3 is a diagram of optimizing a modulation module and a waveform by using a neural network model. 3b in FIG. 3 is a diagram of optimizing an encoding module and a modulation module by using a neural network model. 3c in FIG. 3 is a diagram of optimizing a reference signal by using a neural network model.

In 3a in FIG. 3, after a to-be-transmitted bit is encoded through forward error correction (forward error correction, FEC) encoding to obtain an encoded bit, the encoded bit is modulated by using a modulation neural network model (that is, an NN-Mod module in 3a in FIG. 3), mapped to a physical resource, transformed through inverse fast Fourier transform (inverse fast Fourier transform, IFFT) to a time domain signal, processed by using a time signal neural network model (that is, a T-NN module in 3a in FIG. 3), and then sent. A received signal is first processed by the time signal neural network model, transformed to a frequency domain signal through fast Fourier transform (fast Fourier transform, FFT), demodulated by using a demodulation neural network model (that is, an NN-DeMod module in 3a in FIG. 3), and then sent for FEC decoding.

In 3b in FIG. 3, a to-be-transmitted bit is processed by a coding and modulation neural network model (that is, an NN-CoMo module in 3b in FIG. 3) to obtain a modulation symbol, and the modulation symbol is sent after being processed by a module such as IFFT. A receive end directly sends a signal processed by a module such as FFT to a decoding and demodulation neural network model (that is, an NN-DeCoMo module in 3b in FIG. 3) for processing, to obtain an estimated to-be-sent bit.

In 3c in FIG. 3, a transmit end generates a reference signal based on a reference signal neural network model (that is, an NN-RS module in 3c in FIG. 3), and a receive end processes a received signal based on the reference signal and a corresponding channel estimation neural network model (that is, an NN-CE module in 3c in FIG. 3) to obtain an estimated channel.

3. Intelligent air interface training

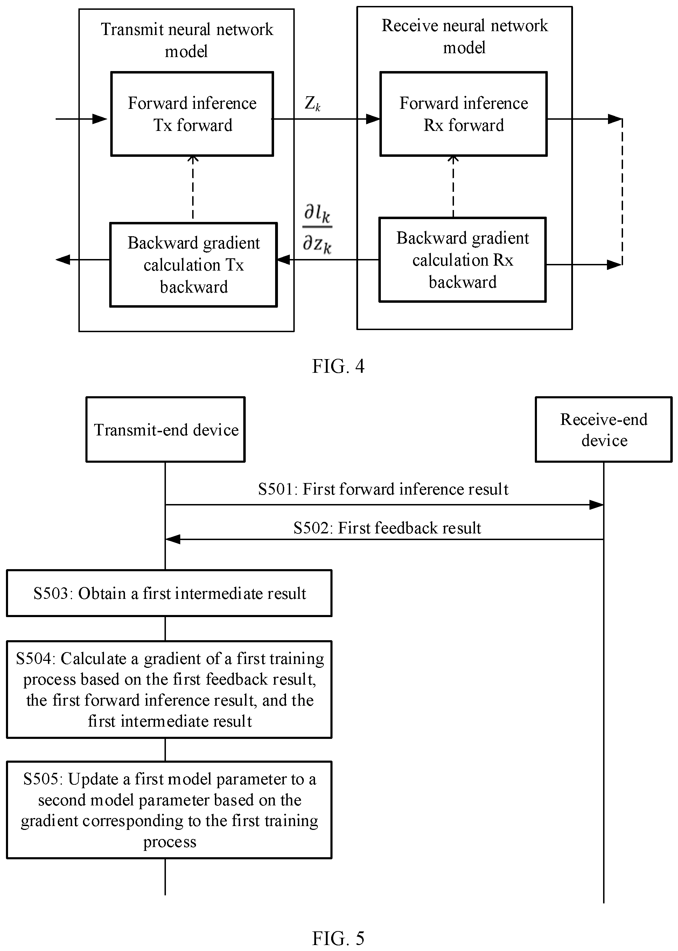

Training of an intelligent air interface may be understood as corresponding training of a neural network model applied in a wireless communication system. FIG. 4 is a diagram of a training procedure of an intelligent air interface according to this application. A transmit neural network model performs forward inference on training data, and sends a forward inference result to a receive neural network model. The receive neural network model performs forward inference and backward gradient calculation based on the forward inference result, to obtain a feedback result. The receive neural network model sends the feedback result to the transmit neural network model. The transmit neural network model performs backward gradient calculation based on the feedback result, and updates a model parameter of the transmit neural network model based on a gradient obtained through backward gradient calculation. For example, a $t^{th}$ round of update of the transmit neural network model is shown in Formula (2).

$$w_{t+1} = w_t - \eta_t \sum_{k=1}^{K} \frac{\partial l_k}{\partial w_t} = w_t - \eta_t \sum_{k}^{K} \frac{\partial l_k}{\partial z_k} \frac{\partial z_k}{\partial w_t} \qquad (2)$$

Herein, $w_{t+1}$ is a parameter of a $(t+1)^{th}$ round, that is, a parameter obtained through the $t^{th}$ round of update; $W_t$ is a parameter of the $t^{th}$ round; $z_k$ is a corresponding output of the transmit neural network model for a $k^{th}$ training sample; $l_k$ is a loss function corresponding to the $t^{th}$ round; K is a quantity of samples in this round of training; $\eta_t$ is a learning rate; and $\frac{\partial l_k}{\partial z_k}$ is a gradient output by the loss function to the transmit neural network model.

In other words, in any round of training process, the transmit neural network model first performs forward inference, to obtain a forward inference result and an intermediate result; the intermediate inference result is cached; and then a loss function is calculated from a final layer, gradient calculation is performed layer by layer according to a chain rule, and a forward inference result at each layer needs to be used in a gradient calculation process. Gradients calculated based on a plurality of pieces of training data are added to update a model parameter of the transmit neural network model.

Generally, the training procedure shown in FIG. 4 is performed offline. To be specific, the neural network model is trained in a training system by using a large amount of simulation data or offline data collected over an air interface, and the neural network model is deployed in a device after the training is completed. However, a difference exists between a manner of exchanging information between the transmit neural network model and the receive neural network model in a training process and a manner of exchanging information between the transmit neural network model and the receive neural network model in actual application. This affects performance of a wireless communication system to which a neural network model is applied.

This application provides a neural network model training method, which helps improve adaptation between a neural network model and an actual application scenario, thereby facilitating improvement of performance of a wireless communication system to which the neural network model is applied. The following further describes the neural network model training method and a communication apparatus provided in this application with reference to the accompanying drawings.

FIG. 5 is a schematic flowchart of a neural network model training method according to an embodiment of this application. As shown in FIG. 5, the neural network model training method includes S501 to S505 below. The method shown in FIG. 5 may be performed by a transmit-end device and a receive-end device, or the method shown in FIG. 5 may be performed by a module in a transmit-end device and a module in a receive-end device, or the method shown in FIG. 5 may be performed by a chip in a transmit-end device and a chip in a receive-end device. FIG. 5 is described by using an example in which the transmit-end device and the receive-end device are execution entities of the method. It should be noted that the transmit-end device (or the receive-end device) mentioned in this application may be the network device shown in FIG. 1a, or may be the terminal device shown in FIG. 1a. This is not specifically limited in this application. Specifically:

S501: A transmit-end device sends a first forward inference result to the receive-end device, where the first forward inference result is obtained by performing, by a first neural network model based on a first model parameter, forward inference on training data included in a first training process, the first training process is any one of at least one training process corresponding to the first neural network model, and the first neural network model is a model deployed on the transmit-end device.

It should be understood that, in this application, a neural network model deployed in the transmit-end device is referred to as a first neural network model, the first neural network model corresponds to at least one training process, and the transmit-end device may update a model parameter of the first neural network model based on training data included in (or understood as corresponding to) each training process. In specific implementations of S501 to S505, description is provided by merely using an example in which the model parameter of the first neural network model is updated based on training data included in a specific training process (referred to as a first training process in this application) in the at least one training process. The first model parameter is an initial model parameter in a model parameter update process performed based on the training data in the first training process. The training data may be understood as data used for neural network model training. For example, the training data may be training data with a label (or referred to as a tag), and is used to update a model parameter of a neural network model (including the first neural network model or a second neural network model mentioned in this application). When the training data has a label, the label is related to a task of the neural network model, and the label may be understood as an expected result obtained after the neural network model processes the training data. For example, if the neural network model is used for data recovery (that is, the task of the neural network model is a data recovery task), the label of the training data is a real value of the training data (or understood as to-be-recovered data); or if the neural network model is used for data classification (that is, the task of the neural network model is a data classification task), the label of the training data is a real type of the training data (or understood as to-be-classified data). A specific representation form of the training data is not specifically limited in this application.

In other words, the transmit-end device obtains the training data included in the first training process, and performs forward inference on the training data by using the first neural network model, to obtain the first forward inference result and the first intermediate result. The first intermediate result is generated when forward inference is performed on the training data included in the first training process, that is, the first intermediate result may be understood as a general term of information generated in a process of generating the first forward inference result by the first neural network model. Further, the transmit-end device sends the first forward inference result to the receive-end device.

It should be noted that the forward inference result mentioned in this application is a result to be sent to the receive-end device after calculation (or understood as inference) is performed by using the first neural network model, or is understood as a calculation result obtained by a final layer of neural network in the first neural network model in a process of calculating the forward inference result. The forward inference result mentioned in this application may also be referred to as a calculation result, an inference result, or the like in another solution. A name of the forward inference result is not specifically limited in this application. The intermediate result mentioned in this application is information generated in a process in which the first neural network model calculates the forward inference result based on the training data, or is referred to as an intermediate state. Alternatively, the intermediate result may be understood as a calculation result obtained by another layer of neural network in the first neural network model except the final layer of neural network in a process of calculating the forward inference result.

In a possible implementation, after generating the first intermediate result, the transmit-end device caches the first intermediate result, that is, stores the first intermediate result in parameter cache space corresponding to the first training process.

S502: The transmit-end device receives a first feedback result for the first forward inference result from the receive-end device.

In other words, after receiving the first forward inference result from the transmit-end device, the receive-end device performs calculation (for example, including at least one of forward inference, loss function calculation, or backward gradient calculation) on the first forward inference result by using a second neural network model deployed in the receive-end device, to obtain the first feedback result; and feeds back the first feedback result to the transmit-end device. The first feedback result may be a loss result obtained through inference calculation by using a neural network model (that is, the second neural network model mentioned in this application) of the receive-end device, or a gradient obtained through backward gradient calculation by using the second neural network model. This is not specifically limited in this application.

In a possible implementation, the first training process includes at least one subprocess. Each subprocess includes at least one piece of training data. In this case, the first forward inference result includes a forward inference result of each piece of training data in the training data included in the first training process. The first intermediate result includes an intermediate result corresponding to the forward inference result of each piece of training data. The first feedback result includes a feedback result corresponding to the forward inference result of each piece of training data. The forward inference result of each piece of training data is obtained based on the first model parameter.

For example, the first training process includes a subprocess 1 and a subprocess 2, the subprocess 1 includes training data 1 and training data 2, and the subprocess 2 includes training data 3 and training data 4. An intermediate result, a forward inference result, and a feedback result corresponding to each piece of training data are shown in Table 1.

Table 1

| Training data identifier | Intermediate result identifier | Forward inference result identifier | Feedback result identifier |
|---|---|---|---|
| Training data 1 | Intermediate result 1 | Forward inference result 1 | Feedback result 1 |
| Training data 2 | Intermediate result 2 | Forward inference result 2 | Feedback result 2 |
| Training data 3 | Intermediate result 3 | Forward inference result 3 | Feedback result 3 |
| Training data 4 | Intermediate result 4 | Forward inference result 4 | Feedback result 4 |

In this case, the first forward inference result includes a forward inference result 1 to a forward inference result 4, the first intermediate result includes an intermediate result 1 to an intermediate result 4, and the first feedback result includes a feedback result 1 to a feedback result 4.

In a possible implementation, at least one of the following is determined based on at least one of a capability of the transmit-end device, a capability of the receive-end device, and/or a channel condition: a quantity of the training data included in the first training process; a quantity of subprocesses included in the first training process; or a quantity of training data included in the subprocess. The capability of the transmit-end device includes one or more of a calculation speed of the transmit-end device, a size of cache space of the transmit-end device, and a forward inference time and/or a backward gradient calculation time of the transmit-end device for a reference model. The capability of the receive-end device includes one or more of a calculation speed of the receive-end device, a size of cache space of the receive-end device, and a forward inference time and/or a backward gradient calculation time of the receive-end device for a reference model. The channel condition includes one or more of a radio resource, channel quality, a communication rate, and/or a communication delay for communication between the transmit-end device and the receive-end device. It should be noted that the reference model mentioned in this application is a model used to measure a calculation time (for example, a forward inference time and/or a backward gradient calculation time) of a transmit end. A name of the reference model is not specifically limited in this application, and a specific model structure of the reference model is not specifically limited either.

In other words, after obtaining at least one of the capability of the transmit-end device, the capability of the receive-end device, and/or the channel condition, a specific device (for example, the transmit-end device, the receive-end device, or a network device) determines, based on at least one of the capability of the transmit-end device, the capability of the receive-end device, and/or the channel condition, a quantity of training data included in the first training process; or determines a quantity of subprocesses included in the first training process; or determines a quantity of training data included in each subprocess in the first training process. For ease of understanding, description is provided below by using an example in which the network device determines, based on the capability of the transmit-end device and the capability of the receive-end device, the quantity of the training data included in the first training process. This cannot be considered as specific limitation on this application.

In Example 1, the transmit-end device receives the capability from the receive-end device, and determines, based on the capability of the transmit-end device and the capability of the receive-end device, the quantity of the training data included in the first training process. Further, the transmit-end device sends, to the receive-end device, indication information indicating the quantity of the training data included in the first training process.

For example, the transmit-end device is a network device N, and the receive-end device is a terminal device B. In this case, the network device N obtains a capability of the terminal device B, and determines, based on a capability of the network device N and the capability of the terminal device B, the quantity of the training data included in the first training process. Further, the network device N sends indication information to the terminal device B. The indication information indicates the quantity of the training data included in the first training process.

In Example 2, the receive-end device receives the capability of the transmit-end device, and determines, based on the capability of the transmit-end device and the capability of the receive-end device, the quantity of training data included in the first training process. Further, the receive-end device sends, to the transmit-end device, indication information indicating the quantity of the training data included in the first training process.

For example, the transmit-end device is a terminal device A, and the receive-end device is a network device N. In this case, the network device N obtains a capability of the terminal device A, and determines, based on the capability of the terminal device A and a capability of the network device N, the quantity of the training data included in the first training process. Further, the network device N sends indication information to the terminal device A. The indication information indicates the quantity of the training data included in the first training process.

In Example 3, a device in a communication connection to the transmit-end device and the receive-end device is configured to: obtain the capability of the transmit-end device and the capability of the receive-end device, and determine, based on the capability of the transmit-end device and the capability of the receive-end device, the quantity of the training data included in the first training process. Further, indication information indicating the quantity of the training data included in the first training process is sent to the transmit-end device and the receive-end device.

For example, the transmit-end device is a terminal device A, and the receive-end device is a terminal device B. In this case, a network device N that provides services for the terminal device A and the terminal device B obtains the capability of the terminal device A and the capability of the terminal device B, and determines, based on the capability of the terminal device A and the capability of the terminal device B, the quantity of the training data included in the first training process. Further, the base station: the network device N separately sends the indication information to the terminal device A and the terminal device B, to indicate the quantity of the training data included in the first training process.

S503: The transmit-end device obtains a first intermediate result, where the first intermediate result is generated when forward inference is performed on the training data included in the first training process.

It may be understood that, if the transmit-end device caches the first intermediate result after generating the first intermediate result in S501, the transmit-end device may obtain the first intermediate result from the parameter cache space corresponding to the first training process. If the transmit-end device does not cache the first intermediate result after generating the first intermediate result in S501, the transmit-end device may perform forward inference again based on the training data included in the first training process, to obtain the first intermediate result.

In a possible implementation, to improve efficiency of obtaining, by the transmit-end device, an intermediate result corresponding to each forward inference result, intermediate results of different training processes may be distinguished based on parameter cache space. In other words, different training processes corresponding to the first neural network model correspond to different parameter cache space, that is, intermediate results of training data belonging to a same training process are stored in same parameter cache space, and intermediate results of training data belonging to different training processes are stored in different parameter cache space. Alternatively, intermediate results of different subprocesses of a same training process may be distinguished based on parameter cache space. In other words, different subprocesses in the first training process correspond to different parameter cache space, that is, intermediate results of training data belonging to a same subprocess are stored in same parameter cache space, and intermediate results of training data belonging to different subprocesses are stored in different parameter cache space.

S504: The transmit-end device calculates a gradient of the first training process based on the first feedback result, the first forward inference result, and the first intermediate result.

It may be understood that the first forward inference result generated by the transmit-end device does not carry information about a real channel, but the first forward inference result received by the receive-end device is transmitted over the real channel. In other words, the first forward inference result received by the receive-end device is affected by a transmission environment of the real channel (that is, carries the information about the real channel) in a transmission process. Therefore, the first feedback result obtained by the receive-end device based on the first forward inference result may also be understood as carrying the information about the real channel. Further, after the receive-end device sends the first feedback result to the transmit-end device, the transmit-end device calculates the gradient of the first training process based on the first feedback result (including the information about the real channel), the first forward inference result (excluding the information about the real channel), and the first intermediate result.

In a possible implementation, if the transmit-end device caches the first intermediate result after generating the first intermediate result in S501, after the transmit-end device performs S504, to save cache resources of the transmit-end device, the transmit-end device may clear the first intermediate result from the parameter cache space corresponding to the first training process.

S505: The transmit-end device updates the first model parameter to a second model parameter based on the gradient corresponding to the first training process.

After obtaining the gradient corresponding to the first training process, the transmit-end device updates the model parameter of the first neural network model to the second model parameter. It may be understood that the first model parameter is a parameter of the first neural network model before the transmit-end device performs update in the first training process, and the second model parameter is a parameter of the first neural network model after the transmit-end device performs update in the first training process.

It should be understood that the first neural network model corresponds to at least one training process. The transmit-end device obtains, in a manner of obtaining the gradient corresponding to the first training process (that is, S501 to S504), a gradient corresponding to each training process, and updates the model parameter of the first neural network model based on the gradients of all the training processes corresponding to the first neural network model.

The following describes a specific manner in which the transmit-end device updates the model parameter of the first neural network model based on the gradients of all the training processes corresponding to the first neural network model.

Manner 1: iterative update manner of training processes

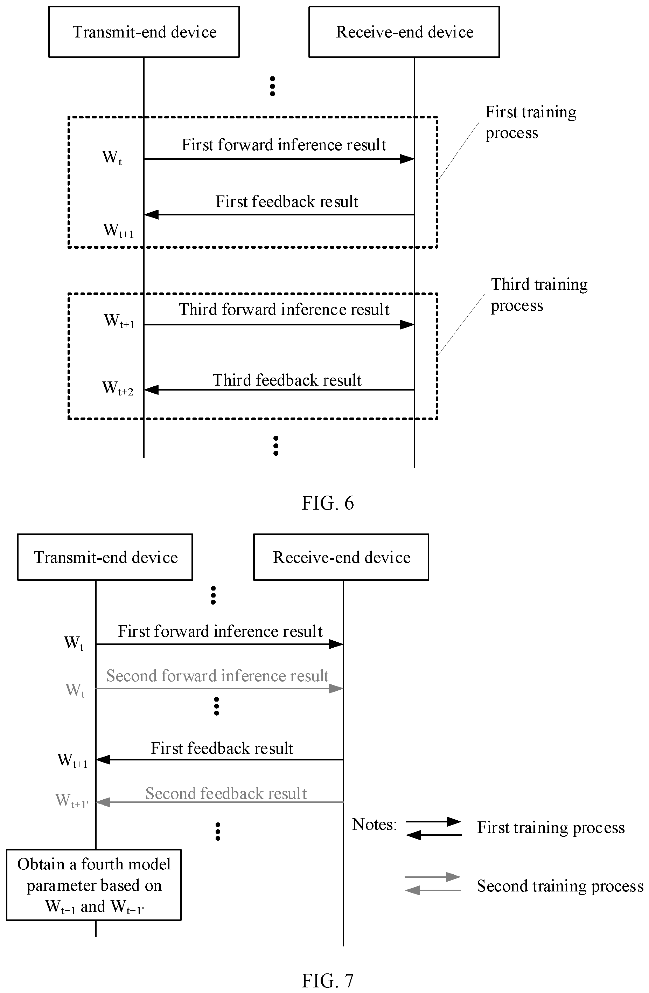

With reference to FIG. 6, the first neural network model corresponds to N training processes, where N is a positive integer greater than 1. The first training process described in FIG. 5 is one of the N training processes, and a third training process is any one of the N training processes except the first training process. In FIG. 6, description is provided by using an example in which the third training process is a next training process of the first training process. This should not be considered as specific limitation on this application.

In other words, the transmit-end device performs forward inference on the training data of the first training process based on the first neural network model corresponding to $W_t$ (that is, the first model parameter), to obtain the first forward inference result; and sends the first forward inference result to the receive-end device. Further, the transmit-end device receives the first feedback result for the first forward inference result from the receive-end device, and calculates the gradient of the first training process based on the first feedback result. Further, the transmit-end device updates $W_t$ to $W_{t+1}$ (that is, the second model parameter) based on the gradient corresponding to the first training process. Then, the transmit-end device performs forward inference on training data of the third training process based on the first neural network model corresponding to $W_{t+1}$ (that is, the second model parameter), to obtain a third forward inference result; and sends the third forward inference result to the receive-end device. Further, the transmit-end device receives a third feedback result for the third forward inference result from the receive-end device, and calculates a gradient of the third training process based on the third feedback result. Further, the transmit-end device updates $W_{t+1}$ (that is, the second model parameter) to $W_{t+2}$ based on the gradient corresponding to the third training process.

Manner 2: hybrid update manner (including parallel update and iterative update) of training processes

With reference to FIG. 7, the first neural network model corresponds to N training processes, where N is a positive integer greater than 1. The first training process described in FIG. 5 is one of the N training processes, and a second training process is any one of the N training processes except the first training process. In FIG. 7, Manner 2 is described by using an example in which the first training process and the second training process are training processes of a neural network model based on a same initial model parameter.

In other words, the transmit-end device performs forward inference on the training data of the first training process based on the first neural network model corresponding to $W_t$ (that is, the first model parameter), to obtain the first forward inference result; and sends the first forward inference result to the receive-end device. Then, the transmit-end device performs forward inference on training data of the second training process based on the first neural network model corresponding to $W_t$ (that is, the first model parameter), to obtain a second forward inference result; and sends the second forward inference result to the receive-end device. Further, the transmit-end device receives the first feedback result for the first forward inference result from the receive-end device, and calculates the gradient of the first training process based on the first feedback result, the first forward inference result, and the first intermediate result (an intermediate result generated when forward inference is performed on the training data included in the first training process). Further, the transmit-end device updates $W_t$ to $W_{t+1}$ (that is, the second model parameter) based on the gradient corresponding to the first training process. The transmit-end device receives a second feedback result for the second forward inference result from the receive-end device, and calculates a gradient of the second training process based on the second feedback result, the second forward inference result, and the second intermediate result (an intermediate result generated when forward inference is performed on the training data included in the second training process). Further, the transmit-end device updates $W_t$ to $W_{t+1'}$ (that is, a third model parameter) based on the gradient corresponding to the first training process. Further, the transmit-end device obtains (or understood as updates) the model parameter of the first neural network model as a fourth model parameter based on the second model parameter (that is, $W_{t+1}$) and the third model parameter (that is, $W_{t+1'}$).

It should be noted that obtaining the fourth model parameter based on the second model parameter (that is, $W_{t+1}$) and the third model parameter (that is, $W_{t+1'}$) mentioned in this application includes any one of the following two understandings:

① The transmit-end device combines the second model parameter (that is, $W_{t+1}$) and the third model parameter (that is, $W_{t+1'}$), to obtain the fourth model parameter. For example, the fourth model parameter is a weighted average value of the second model parameter and the third model parameter.

② The transmit-end device performs a plurality of iterations on the model parameter of the first neural network model based on training data of a plurality of training processes on an iteration basis of the second model parameter, to obtain a model parameter W obtained through the plurality of iterations. In addition, the transmit-end device performs a plurality of iterations on the model parameter of the first neural network model based on the training data of the plurality of training processes on an iteration basis of the third model parameter, to obtain a model parameter W' obtained through the plurality of iterations. Finally, the model parameter W and the model parameter W' are combined to obtain the fourth model parameter. For example, after obtaining the second model parameter (that is, $W_{t+1}$) and the third model parameter (that is, $W_{t+1'}$), the transmit-end device updates the second model parameter (that is, $W_{t+1}$) of the first neural network model to the model parameter $W_{t+2}$ based on training data of a training process P1 in the N training processes (that is, at least one training process corresponding to the first neural network model); and updates the third model parameter (that is, $W_{t+1'}$) of the first neural network model to a model parameter $W_{t+2'}$ based on training data of a training process P2 in the N training processes. Further, the transmit-end device may combine the model parameter $W_{t+2}$ and the model parameter $W_{t+2'}$, to obtain the fourth model parameter.

It can be learned that, according to the neural network model training method described in FIG. 5 in this application, after the first neural network model is deployed on the transmit-end device, the transmit-end device performs forward inference on the training data by using the first neural network model, and sends a forward inference result to the receive-end device by using a channel of a communication system. The forward inference result is affected by a transmission environment of the channel (that is, carries information about a real channel). Therefore, a feedback result obtained based on the forward inference result may also be understood as carrying the information about the real channel, and the transmit-end device subsequently updates the model parameter of the first neural network model based on the feedback result, which helps improve adaptation between the neural network model and the communication system, thereby facilitating optimization of performance of a wireless communication system to which the neural network model is applied.

It should be noted that, in the neural network model training method shown in FIG. 5, only an update process of the neural network model (that is, the foregoing first neural network model) deployed on the transmit-end device is described, and an update process of the neural network model (that is, the second neural network model mentioned in this application) deployed on the receive-end device is not limited. In other words, in the update process of the first neural network model, the receive-end device may update the model parameter of the second neural network model based on the forward inference result (including the first forward inference result to the third forward inference result above) from the transmit-end device, and the receive-end device may not update the model parameter of the second neural network model. This is not specifically limited in this application. In addition, when the receive-end device updates the model parameter of the second neural network model based on the forward inference result from the transmit-end device, a specific update manner used by the receive-end device to update the model parameter of the second neural network model is not specifically limited in this application. For ease of understanding, this application provides two examples in which the receive-end device updates the model parameter of the second neural network model.

In a possible implementation, each time the receive-end device receives a forward inference result from the transmit-end device, the receive-end device updates the model parameter of the second neural network model based on the forward inference result, and performs hybrid update (including parallel update and iterative update) based on forward inference results of a plurality of training processes. In the following example, the update process of the second neural network model is explained by using an example in which the model parameter of the second neural network model before the update is a fifth model parameter.

For example, the foregoing example corresponding to FIG. 7 is inherited. After receiving the first forward inference result, the receive-end device performs calculation on the first forward inference result based on the second neural network model corresponding to the fifth model parameter, to obtain the first feedback result; and updates the fifth model parameter of the second neural network model to a sixth model parameter based on the first forward inference result. After receiving the second forward inference result, the receive-end device performs calculation on the second forward inference result based on the second neural network model corresponding to the fifth model parameter, to obtain the second feedback result; and updates the fifth model parameter of the second neural network model to a seventh model parameter based on the second forward inference result. Further, the receive-end device obtains (or understood as updates) the model parameter of the second neural network model based on the sixth model parameter and the seventh model parameter, as an eighth model parameter. Specifically, for understanding of obtaining the eighth model parameter based on the sixth model parameter and the seventh model parameter by the receive-end device, refer to understanding of obtaining the fourth model parameter based on the second model parameter (that is, $W_{t+1}$) and the third model parameter (that is, $W_{t+1'}$) by the transmit-end device in FIG. 7. Details are not described herein again.

In a possible implementation, each time the receive-end device receives a forward inference result from the transmit-end device, the receive-end device updates the model parameter of the second neural network model based on the forward inference result, and sequentially performs iterative update based on forward inference results of a plurality of training processes.

For example, the foregoing example corresponding to FIG. 6 is inherited. In the first training process, after receiving the first forward inference result, the receive-end device performs calculation on the first forward inference result based on the second neural network model corresponding to the fifth model parameter, to obtain the first feedback result; and updates the fifth model parameter of the second neural network model to the sixth model parameter based on the first forward inference result. In the third training process, after receiving the third forward inference result, the receive-end device performs calculation on the third forward inference result based on the second neural network model corresponding to the sixth model parameter, to obtain the third feedback result; and updates the sixth model parameter of the second neural network model to a ninth model parameter based on the third forward inference result.

It should be further noted that a training process in this embodiment of this application includes a process of performing forward inference on one-group training data (that is, training data of the training process) by using the first neural network model, a process of receiving a feedback result corresponding to the group training data, a process of calculating a gradient based on a forward inference result, an intermediate result, and the feedback result of the group training data, and a process of updating the model parameter of the first neural network model based on the gradient. A subprocess in this embodiment of this application includes a process of performing forward inference on one-group training data (that is, training data of the subprocess) by using the first neural network model, a process of receiving a feedback result corresponding to the group training data, and a process of calculating a gradient based on a forward inference result, an intermediate result, and the feedback result of the group training data. Names of the training process and the subprocess are not specifically limited in this application.

For example, in an application scenario, different services of the transmit-end device correspond to different neural network models. In this case, it may be said that one service corresponds to one training process, and one update process of a model parameter of a neural network model in a specific service is referred to as one subprocess (that is, the training process mentioned in this application).

For another example, as shown in FIG. 7, the transmit-end device obtains the fourth model parameter as an end of the training process, and considers each update process of the first neural network model based on a feedback result as an end of the subprocess (that is, the training process mentioned in this application).

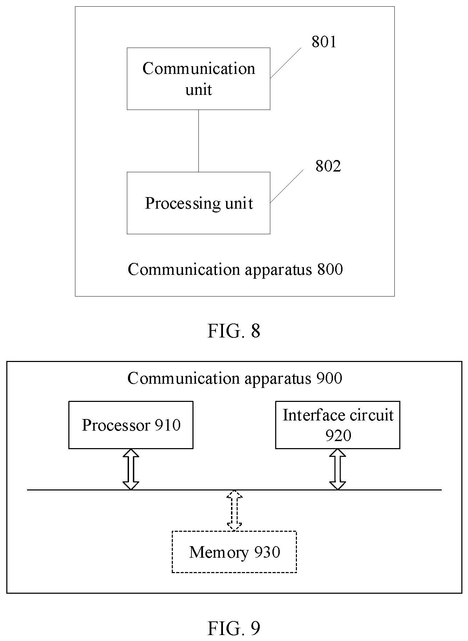

FIG. 8 is a diagram of a structure of a communication apparatus 800 according to an embodiment of this application. The communication apparatus shown in FIG. 8 may be a transmit-end device, may be an apparatus in a transmit-end device, or may be an apparatus that is used together with a transmit-end device. The communication apparatus shown in FIG. 8 may include a communication unit 801 and a processing unit 802. The communication apparatus shown in FIG. 8 may be a receive-end device, or may be an apparatus in a receive-end device, or may be an apparatus that can be used together with a receive-end device. The communication apparatus shown in FIG. 8 may include the communication unit 801 and the processing unit 802. Specifically, the processing unit 802 is configured to process data. The data may be data received by the communication unit 801, and the processed data may also be sent by the communication unit 801.

In an implementation, the communication apparatus 800 is a transmit-end device, an apparatus in a transmit-end device, or an apparatus that can be used together with a transmit-end device.

The communication unit 801 is configured to send a first forward inference result to a receive-end device, where the first forward inference result is obtained by performing, by a first neural network model based on a first model parameter, forward inference on training data included in a first training process, the first training process is any one of at least one training process corresponding to the first neural network model, and the first neural network model is a model deployed on the transmit-end device. The communication unit 801 is further configured to receive a first feedback result for the first forward inference result from the receive-end device. The processing unit 802 is configured to obtain a first intermediate result, where the first intermediate result is generated when forward inference is performed on training data included in the first training process. The processing unit 802 is configured to calculate a gradient of the first training process based on the first feedback result, the first forward inference result, and the first intermediate result. The processing unit 802 is further configured to update the first model parameter to a second model parameter based on the gradient corresponding to the first training process.

In a possible implementation, the processing unit 802 is further configured to obtain the first intermediate result from parameter cache space corresponding to the first training process.

In a possible implementation, after calculating the gradient of the first training process based on the first feedback result, the first forward inference result, and the first intermediate result, the processing unit 802 is further configured to clear the first intermediate result from the parameter cache space corresponding to the first training process.

In a possible implementation, the processing unit 802 is further configured to perform forward inference again based on the training data included in the first training process, to obtain the first intermediate result.

In a possible implementation, the first training process includes at least one subprocess. Each subprocess includes at least one piece of training data. The first forward inference result includes a forward inference result of each piece of training data in the training data included in the first training process. The first intermediate result includes an intermediate result corresponding to the forward inference result of each piece of training data. The first feedback result includes a feedback result corresponding to the forward inference result of each piece of training data. The forward inference result of each piece of training data is obtained based on the first model parameter.

In a possible implementation, at least one of the following is determined based on at least one of a capability of the transmit-end device, a capability of the receive-end device, and/or a channel condition: a quantity of the training data included in the first training process; a quantity of subprocesses included in the first training process; or a quantity of training data included in the subprocess.

In a possible implementation, the processing unit 802 is further configured to update the first model parameter to a third model parameter based on a gradient corresponding to a second training process. The second training process is any one of the at least one training process except the first training process. The gradient of the second training process is obtained by performing backward gradient calculation based on a second feedback result, a second forward inference result, and a second intermediate result. The second forward inference result is obtained by performing, based on the first model parameter, forward inference on training data included in the second training process. The second intermediate result is generated when forward inference is performed on the training data included in the first training process. The second feedback result is a feedback result for the second forward inference result. The processing unit 802 is further configured to update a model parameter of the first neural network model to a fourth model parameter based on the second model parameter and the third model parameter.

In a possible implementation, a quantity of training processes in the at least one training process corresponding to the first neural network model is determined based on at least one of the capability of the transmit-end device, the capability of the receive-end device, and/or the channel condition.

In a possible implementation, the capability of the transmit-end device includes one or more of a calculation speed of the transmit-end device, a size of cache space of the transmit-end device, and a forward inference time and/or a backward gradient calculation time of the transmit-end device for a reference model. The capability of the receive-end device includes one or more of a calculation speed of the receive-end device, a size of cache space of the receive-end device, and a forward inference time and/or a backward gradient calculation time of the receive-end device for a reference model. The channel condition includes one or more of a radio resource, channel quality, a communication rate, and a communication delay for communication between the transmit-end device and the receive-end device.

In a possible implementation, the communication unit 801 is configured to receive capability information from the receive-end device, where the capability information indicates the capability of the receive-end device.

In a possible implementation, different training processes of the first neural network model correspond to different parameter cache space.

In a possible implementation, different subprocesses in the first training process correspond to different parameter cache space.

In an implementation, the communication apparatus 800 is a receive-end device, an apparatus in a receive-end device, or an apparatus that can be used together with a receive-end device.

The communication unit 801 is configured to receive a first forward inference result from a transmit-end device, where the first forward inference result is obtained by performing, by a first neural network model based on a first model parameter, forward inference on training data included in a first training process, the first training process is any one of at least one training process corresponding to the first neural network model, and the first neural network model is a model deployed on the transmit-end device. The communication unit 801 is further configured to send a first feedback result to the transmit-end device based on the first forward inference result.

In a possible implementation, the first training process includes at least one subprocess. Each subprocess includes at least one piece of training data. The first forward inference result includes a forward inference result of each piece of training data in the training data included in the first training process. The first intermediate result includes an intermediate result corresponding to the forward inference result of each piece of training data. The first feedback result includes a feedback result corresponding to the forward inference result of each piece of training data. The forward inference result of each piece of training data is obtained based on the first model parameter.

In a possible implementation, at least one of the following is determined based on at least one of a capability of the transmit-end device, a capability of the receive-end device, and/or a channel condition: a quantity of the training data included in the first training process; a quantity of subprocesses included in the first training process; or a quantity of training data included in the subprocess.

In a possible implementation, the communication unit 801 is further configured to receive a second forward inference result from the transmit-end device, where the second forward inference result is obtained by performing, based on the first model parameter, forward inference on training data included in a second training process, and the second training process is any one of the at least one training process except the first training process. The communication unit 801 is further configured to send a second feedback result to the transmit-end device based on the second forward inference result, where the second feedback result is used together with the first feedback result to update a model parameter of the first neural network model.

In a possible implementation, a quantity of training processes in the at least one training process corresponding to the first neural network model is determined based on at least one of the capability of the transmit-end device, the capability of the receive-end device, and/or the channel condition.

In a possible implementation, the capability of the transmit-end device includes one or more of a calculation speed of the transmit-end device, a size of cache space of the transmit-end device, and a forward inference time and/or a backward gradient calculation time of the transmit-end device for a reference model. The capability of the receive-end device includes one or more of a calculation speed of the receive-end device, a size of cache space of the receive-end device, and a forward inference time and/or a backward gradient calculation time of the receive-end device for a reference model. The channel condition includes one or more of a radio resource, channel quality, a communication rate, and/or a communication delay for communication between the transmit-end device and the receive-end device.

In a possible implementation, a second neural network model is deployed on the receive-end device. The processing unit 802 is further configured to: update a fifth model parameter of the second neural network model to a sixth model parameter based on the first forward inference result; update the fifth model parameter of the second neural network model to a seventh model parameter based on the second forward inference result; and obtain an eighth model parameter based on the sixth model parameter and the seventh model parameter.

In a possible implementation, a second neural network model is deployed on the receive-end device, and the processing unit 802 is further configured to update a fifth model parameter of the second neural network model to a sixth model parameter based on the first forward inference result.

For more detailed descriptions of the communication unit 801 and the processing unit 802, refer to related descriptions of the transmit-end device or the receive-end device in the method embodiment shown in FIG. 5.

As shown in FIG. 9, a communication apparatus 900 includes a processor 910 and an interface circuit 920. The processor 910 and the interface circuit 920 are coupled to each other. It may be understood that the interface circuit 920 may be a transceiver or an input/output interface. Optionally, the communication apparatus 900 may further include a memory 930, configured to: store instructions executed by the processor 910, or store input data required by the processor 910 to run instructions, or store data generated after the processor 910 runs instructions.

When the communication apparatus 900 is configured to implement the method shown in FIG. 5, the processor 910 is configured to implement a function of the processing unit 802, and the interface circuit 920 is configured to implement a function of the communication unit 801.

When the communication apparatus is a chip used in a transmit-end device, the terminal chip implements a function of the transmit-end device in the foregoing method embodiments. The chip in the transmit-end device receiving information from a receive-end device may be understood as that the information is first received by another module (for example, a radio frequency module or an antenna) in the transmit-end device, and then the module sends the information to the chip in the transmit-end device. The chip in the transmit-end device sending information to the receive-end device may be understood as that the information is first sent to the another module (for example, the radio frequency module or the antenna) in the transmit-end device, and then the module sends the information to the receive-end device.

When the communication apparatus is a chip used in a receive-end device, the chip in the receive-end device implements a function of the receive-end device in the foregoing method embodiments. The chip in the receive-end device receiving information from a transmit-end device may be understood as that the information is first received by another module (for example, a radio frequency module or an antenna) in the receive-end device, and then the module sends the information to the chip in the receive-end device. The chip in the receive-end device sending information to the transmit-end device may be understood as that the information is first sent to the another module (for example, the radio frequency module or the antenna) in the receive-end device, and then the module sends the information to the transmit-end device.

In this application, that an entity A sends information to an entity B may be that A directly sends the information to B, or may be that A indirectly sends the information to B via another entity. Similarly, that the entity B receives information from the entity A may be that the entity B directly receives information sent by the entity A, or may be that the entity B indirectly receives information sent by the entity A via another entity. The entity A and the entity B herein each may be a RAN node or a terminal, or may be a module in a RAN node or a terminal. Information sending and receiving may be information exchange between a RAN node and a terminal, for example, information exchange between a base station and a terminal. Information sending and receiving may alternatively be information exchange between two RAN nodes, for example, information exchange between a CU and a DU. Information sending and receiving may alternatively be information exchange between different modules in an apparatus, for example, information exchange between a chip in a terminal and another module in the terminal, or information exchange between a chip in a base station and another module in the base station.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, any conventional processor, or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be disposed in a base station or a terminal. Certainly, the processor and the storage medium may exist in a base station or a terminal as discrete components.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A neural network model training method, wherein the method comprises:

    sending a first forward inference result to a receive-end device, wherein the first forward inference result is obtained by performing, by a first neural network model based on a first model parameter, forward inference on training data comprised in a first training process, the first training process is any one of at least one training process corresponding to the first neural network model, and the first neural network model is a model deployed on a transmit-end device;
    receiving a first feedback result for the first forward inference result from the receive-end device;
    obtaining a first intermediate result, wherein the first intermediate result is generated when forward inference is performed on the training data comprised in the first training process;
    calculating a gradient of the first training process based on the first feedback result, the first forward inference result, and the first intermediate result; and
    updating the first model parameter to a second model parameter based on the gradient corresponding to the first training process.

2. The method according to claim 1, wherein obtaining the first intermediate result comprises:
    obtaining the first intermediate result from parameter cache space corresponding to the first training process.

3. The method according to claim 2, wherein after calculating the gradient of the first training process based on the first feedback result, the first forward inference result, and the first intermediate result, the method further comprises:
    clearing the first intermediate result from the parameter cache space corresponding to the first training process.

4. The method according to claim 1, wherein obtaining the first intermediate result comprises:
    performing forward inference again based on the training data comprised in the first training process, to obtain the first intermediate result.

5. The method according to any one of claims 1 to 4, wherein the first training process comprises at least one subprocess, each subprocess comprises at least one piece of training data, the first forward inference result comprises a forward inference result of each piece of training data in the training data comprised in the first training process, the first intermediate result comprises an intermediate result corresponding to the forward inference result of each piece of training data, the first feedback result comprises a feedback result corresponding to the forward inference result of each piece of training data, and the forward inference result of each piece of training data is obtained based on the first model parameter.

6. The method according to claim 5, wherein at least one of the following is determined based on at least one of a capability of the transmit-end device, a capability of the receive-end device, and/or a channel condition:

    a quantity of the training data comprised in the first training process;
    a quantity of subprocesses comprised in the first training process; or
    a quantity of training data comprised in the subprocess.

7. The method according to any one of claims 1 to 6, wherein the method further comprises:

updating the first model parameter to a third model parameter based on a gradient corresponding to a second training process, wherein the second training process is any one of the at least one training process except the first training process, the gradient of the second training process is obtained by performing backward gradient calculation based on a second feedback result, a second forward inference result, and a second intermediate result, the second forward inference result is obtained by performing, based on the first model parameter, forward inference on training data comprised in the second training process, the second intermediate result is generated when forward inference is performed on the training data comprised in the first training process, and the second feedback result is a feedback result for the second forward inference result; and

updating a model parameter of the first neural network model to a fourth model parameter based on the second model parameter and the third model parameter.

8. The method according to claim 7, wherein a quantity of training processes in the at least one training process corresponding to the first neural network model is determined based on at least one of the capability of the transmit-end device, the capability of the receive-end device, and/or the channel condition.

9. The method according to claim 6 or 8, wherein the capability of the transmit-end device comprises one or more of a calculation speed of the transmit-end device, a size of cache space of the transmit-end device, and a forward inference time and/or a backward gradient calculation time of the transmit-end device for a reference model, the capability of the receive-end device comprises one or more of a calculation speed of the receive-end device, a size of cache space of the receive-end device, and a forward inference time and/or a backward gradient calculation time of the receive-end device for a reference model, and the channel condition comprises one or more of a radio resource, channel quality, a communication rate, and/or a communication delay for communication between the transmit-end device and the receive-end device.

10. The method according to any one of claims 6 to 9, wherein the method further comprises:
receiving capability information from the receive-end device, wherein the capability information indicates the capability of the receive-end device.

11. The method according to any one of claims 1 to 10, wherein different training processes of the first neural network model correspond to different parameter cache space.

12. The method according to any one of claims 5 to 10, wherein different subprocesses in the first training process correspond to different parameter cache space.

13. A neural network model training method, wherein the method comprises:

receiving a first forward inference result from a transmit-end device, wherein the first forward inference result is obtained by performing, by a first neural network model based on a first model parameter, forward inference on training data comprised in a first training process, the first training process is any one of at least one training process corresponding to the first neural network model, and the first neural network model is a model deployed on the transmit-end device; and
sending the first feedback result to the transmit-end device based on the first forward inference result.

14. The method according to claim 13, wherein the first training process comprises at least one subprocess, each subprocess comprises at least one piece of training data, the first forward inference result comprises a forward inference result of each piece of training data in the training data comprised in the first training process, the first intermediate result comprises an intermediate result corresponding to the forward inference result of each piece of training data, the first feedback result comprises a feedback result corresponding to the forward inference result of each piece of training data, and the forward inference result of each piece of training data is obtained based on the first model parameter.

15. The method according to claim 13 or 14, wherein at least one of the following is determined based on at least one of a capability of the transmit-end device, a capability of a receive-end device, and/or a channel condition:

a quantity of the training data comprised in the first training process;
a quantity of subprocesses comprised in the first training process; or
a quantity of training data comprised in the subprocess.

**16.** The method according to any one of claims 13 to 15, wherein the method further comprises:

receiving a second forward inference result from the transmit-end device, wherein the second forward inference result is obtained by performing, based on the first model parameter, forward inference on training data comprised in a second training process, and the second training process is any one of the at least one training process except the first training process; and

sending the second feedback result to the transmit-end device based on the second forward inference result, wherein the second feedback result is used together with the first feedback result to update a model parameter of the first neural network model.

**17.** The method according to claim 16, wherein a quantity of training processes in the at least one training process corresponding to the first neural network model is determined based on at least one of the capability of the transmit-end device, the capability of the receive-end device, and/or the channel condition.

**18.** The method according to claim 15 or 17, wherein the capability of the transmit-end device comprises one or more of a calculation speed of the transmit-end device, a size of cache space of the transmit-end device, and a forward inference time and/or a backward gradient calculation time of the transmit-end device for a reference model, the capability of the receive-end device comprises one or more of a calculation speed of the receive-end device, a size of cache space of the receive-end device, and a forward inference time and/or a backward gradient calculation time of the receive-end device for a reference model, and the channel condition comprises one or more of a radio resource, channel quality, a communication rate, and/or a communication delay for communication between the transmit-end device and the receive-end device.

**19.** The method according to claim 16, wherein a second neural network model is deployed on the receive-end device, and the method further comprises:

updating a fifth model parameter of the second neural network model to a sixth model parameter based on the first forward inference result;

updating the fifth model parameter of the second neural network model to a seventh model parameter based on the second forward inference result; and

obtaining an eighth model parameter based on the sixth model parameter and the seventh model parameter.

**20.** The method according to claim 13, wherein a second neural network model is deployed on the receive-end device, and the method further comprises:

updating a fifth model parameter of the second neural network model to a sixth model parameter based on the first forward inference result.

**21.** A communication apparatus, comprising a module configured to perform the method according to any one of claims 1 to 12, or comprising a module configured to perform the method according to any one of claims 13 to 20.

**22.** A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, wherein the processor is configured to implement the method according to any one of claims 1 to 12 by using a logic circuit or by executing code instructions, or the processor is configured to implement the method according to any one of claims 13 to 20 by using a logic circuit or by executing code instructions.

**23.** The method according to claim 22, wherein the communication apparatus is a chip or a chip system.

**24.** A computer-readable storage medium, wherein the storage medium stores a computer program or instructions, and when the computer program or the instructions are executed by a communication apparatus, the method according to any one of claims 1 to 12 or the method according to any one of claims 13 to 20 is implemented.

**25.** A computer program product, wherein the computer program product comprises a computer program or instructions, and when the computer program or the instruction are executed by a communication apparatus, the communication apparatus is caused to implement the method according to any one of claims 1 to 12 or implement the method according to any one of claims 13 to 20.

FIG. 1a

EP 4 752 789 A1

FIG. 1b

FIG. 2

FEC → NN-Mod → IFFT → T-NN ⌄

FEC ← NN-DeMod ← FFT ← T-NN ←

3a

NN-CoMo → IFFT → T-NN ⌄

NN-DeCoMo ← FFT ← T-NN ←

3b

NN-RS → IFFT → T-NN ⌄

NN-CE ← FFT ← T-NN ←

3c

FIG. 3

```
┌─────────────────────────────┐              ┌─────────────────────────────┐
│  Transmit neural network    │              │  Receive neural network     │
│         model               │              │         model               │
│   ┌──────────────────┐      │     Z_k      │   ┌──────────────────┐      │
│ → │ Forward inference │──────┼──────────────┼─→ │ Forward inference │──────┼──→
│   │    Tx forward     │      │              │   │    Rx forward     │      │
│   └──────────────────┘      │              │   └──────────────────┘      │
│           ↑                 │              │           ↑                 │
│           ┆                 │    ∂l_k       │           ┆                 │
│           ┆                 │    ───        │           ┆                 │
│   ┌──────────────────┐      │    ∂z_k       │   ┌──────────────────┐      │
│ ← │ Backward gradient │←─────┼──────────────┼─  │ Backward gradient │──────┼──→
│   │  calculation Tx   │      │              │   │  calculation Rx   │      │
│   │    backward       │      │              │   │    backward       │      │
│   └──────────────────┘      │              │   └──────────────────┘      │
└─────────────────────────────┘              └─────────────────────────────┘
```

FIG. 4

FIG. 5

FIG. 6

FIG. 7

FIG. 8

FIG. 9

## INTERNATIONAL SEARCH REPORT

International application No.

**PCT/CN2023/115476**

### A. CLASSIFICATION OF SUBJECT MATTER

G06N3/08(2023.01)i; G06N3/04(2023.01)i

According to International Patent Classification (IPC) or to both national classification and IPC

### B. FIELDS SEARCHED

Minimum documentation searched (classification system followed by classification symbols)

IPC: G06N

Documentation searched other than minimum documentation to the extent that such documents are included in the fields searched

Electronic data base consulted during the international search (name of data base and, where practicable, search terms used)

CNTXT, USTXT, VEN, CNKI, IEEE: 训练, 梯度, 发送, 信道, 通信, 损失函数, 更新, 参数, 计算, 神经网络, train+, gradient, send+, communicat+, channel, loss, updat+, parameter? , neural network, calculat+

### C. DOCUMENTS CONSIDERED TO BE RELEVANT

| Category* | Citation of document, with indication, where appropriate, of the relevant passages | Relevant to claim No. |
|---|---|---|
| Y | CN 111783932 A (HUAWEI TECHNOLOGIES CO., LTD.) 16 October 2020 (2020-10-16) description, paragraphs [0015]-[0030] and [0064]-[0079] | 1-25 |
| Y | CN 115603859 A (HUAWEI TECHNOLOGIES CO., LTD.) 13 January 2023 (2023-01-13) description, paragraph [0023] | 1-25 |
| A | CN 115249064 A (CHINA MOBILE COMMUNICATION CO., LTD., RESEARCH INSTITUTE et al.) 28 October 2022 (2022-10-28) entire document | 1-25 |
| A | US 2018367192 A1 (VIRGINIA TECH INTELLECTUAL PROPERTIES, INC.) 20 December 2018 (2018-12-20) entire document | 1-25 |

☐ Further documents are listed in the continuation of Box C. ☑ See patent family annex.

| * | Special categories of cited documents: | | |
|---|---|---|---|
| "A" | document defining the general state of the art which is not considered to be of particular relevance | "T" | later document published after the international filing date or priority date and not in conflict with the application but cited to understand the principle or theory underlying the invention |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **29 April 2024** | **08 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/115476**

| Patent document cited in search report | | | Publication date (day/month/year) | Patent family member(s) | | | Publication date (day/month/year) |
|---|---|---|---|---|---|---|---|
| CN | 111783932 | A | 16 October 2020 | WO | 2020199914 | A1 | 08 October 2020 |
| CN | 115603859 | A | 13 January 2023 | WO | 2023280176 | A1 | 12 January 2023 |
| CN | 115249064 | A | 28 October 2022 | | None | | |
| US | 2018367192 | A1 | 20 December 2018 | US | 2023089393 | A1 | 23 March 2023 |
| | | | | US | 2019349037 | A1 | 14 November 2019 |
| | | | | EP | 3642970 | A1 | 29 April 2020 |
| | | | | US | 2021211164 | A1 | 08 July 2021 |
| | | | | KR | 20200011551 | A | 03 February 2020 |
| | | | | KR | 20210133290 | A | 05 November 2021 |
| | | | | KR | 20230093445 | A | 27 June 2023 |
| | | | | KR | 20200126433 | A | 06 November 2020 |
| | | | | WO | 2018236932 | A1 | 27 December 2018 |
| | | | | CN | 111434049 | A | 17 July 2020 |
| | | | | CN | 113283571 | A | 20 August 2021 |

Form PCT/ISA/210 (patent family annex) (July 2022)